# EUROPÄISCHE PATENTSCHRIFT

(11) **EP 2 183 195 B1**
(45) Veröffentlichungstag und Bekanntmachung des Hinweises auf die Patenterteilung: **26.10.2016**
(21) Anmeldenummer: 08784794.3
(22) Anmeldetag: 16.07.2008
(51) Int. Cl.: C04B 7/345

(54) **EINPHASIGES HYDRAULISCHES BINDEMITTEL, HERSTELLUNGSVERFAHREN UND DAMIT HERGESTELLTER BAUSTOFF**
SINGLE-PHASE HYDRAULIC BINDER, METHODS FOR THE PRODUCTION THEREOF AND STRUCTURAL MATERIAL PRODUCED THEREWITH
LIANT HYDRAULIQUE MONOPHASIQUE, PROCÉDÉS DE PRODUCTION ET MATÉRIAU DE CONSTRUCTION FABRIQUÉ AVEC CE LIANT

(30) Priorität: 27.07.2007 DE 102007035258
(43) Veröffentlichungstag der Anmeldung: 12.05.2010
(73) Patentinhaber: Karlsruher Institut für Technologie, 76131 Karlsruhe (DE)
(72) Erfinder: BEUCHLE, Günter, 76185 Karlsruhe (DE); STEMMERMANN, Peter, 76149 Karlsruhe (DE); SCHWEIKE, Uwe, 76185 Karlsruhe (DE); GARBEV, Krassimir, 76344 Eggenstein-Leopoldshafen (DE)
(74) Vertreter: FDST Patentanwälte
(86) Internationale Anmeldenummer: PCT/EP2008/005786
(87) Internationale Veröffentlichungsnummer: WO 2009/015771

(56) Entgegenhaltungen:
- EP-A- 0 470 948
- WO-A-91/06513
- WO-A-2007/017142
- DD-A1- 117 437
- US-A- 5 804 175
- US-A1- 2004 089 203
- GUOKUANG SUN, ADRIAN R. BROUGH & J. FRANCIS YOUNG: "29Si NMR Study of the Hydration of Ca3SiO5 and beta-Ca2SiO4 in the Presence of Silica Fume" JOURNAL OF THE AMERICAN CERAMIC SOCIETY, Bd. 82, Nr. 11, 1999, Seiten 3225-3230, XP002501376
- KRASSIMIR GARBEV & PETER STEMMERMANN: "Structural Features of C-S-H(I) and Its Carbonation in Air-A Raman Spectroscopic Study. Part I: Fresh Phases" JOURNAL OF THE AMERICAN CERAMIC SOCIETY, Bd. 90, Nr. 3, März 2007 (2007-03), Seiten 900-907, XP002501743
- GUOMIN MI, FUMIO SAITO & MITSUO HANADA: "Mechanochemical synthesis of tobermorite by wet grinding in a planetary ball mill" POWDER TECHNOLOGY, Bd. 93, 1997, Seiten 77-81, XP002501744
- LOCHER, FRIEDRICH WILHELM: "Cement: Principles of Production and Use" 2006, VERLAG BAU + TECHNIK , DÜSSELDORF, DE , XP002501672 Seite 354 - Seite 356; Abbildung 8.32
- ULRICH HOFFMANN, CHRISTIAN HORST & ULRICH KUNZ IN: KAI SUNDMACHER, ACHIM KIENLE & ANDREAS SEIDEL-MORGENSTERN: "Integrated Chemical Processes: Synthesis, Operation, Analysis and Control" 2005, WILEY-VCH VERLAG GMGH & CO.KGAA , WEINHEIM , XP002501751 Kapitel 14: Reactive Comminution Seite 407 - Seite 436

## Beschreibung

Die Erfindung betrifft ein einphasiges hydraulisches Bindemittel, ein Gemisch, das ein derartiges Bindemittel enthält, Verfahren zur Herstellung des Bindemittels und des Gemischs sowie einen Baustoff, der mit dem Bindemittel oder dem Gemisch hergestellt wurde.

Die hydraulische Reaktivität beschreibt die Reaktion eines Bindemittels mit Wasser unter Ausbildung eines festen Materials. Die Definition dieses Vorgangs erfolgt in Anlehnung an die bislang bekannten hydraulischen Bindemittel wie z.B. Portlandzement. Nach Härig, Günther, in Klausen, Technologie der Baustoffe, C.F. Müller Verlag, Heidelberg, 1996, S. 53, erhärten hydraulische Bindemittel nach Wasserzugabe sowohl an Luft als auch unter Wasser. Nach H.F.W. Taylor, The chemistry of cements, Academic Press, London 1964, Seite 2f, ist *Zement* ein *hydraulisches Bindemittel,* das, mit Wasser zu einer Paste (*Zementleim*) angerührt, in Folge von chemischen Reaktionen zwischen dem Wasser und den im Zement vorhandenen Verbindungen selbständig ansteift und zu *Zementstein* aushärtet. Das Ansteifen und Aushärten hängen dabei weder von einer Trocknung noch von Reaktionen mit dem CO₂ aus der Luft ab. Die Reaktion läuft daher sowohl an Luft als auch unter Wasser ab.

Weiterhin sind latenthydraulische (sog. puzzolanische) Bindemittel bekannt. Nach Härig (s.o.) erhärten diese nach Wasserzugabe nur bei Anwesenheit eines Anregers. Zum Start der Abbindereaktion wird dann z.B. Kalkhydrat oder Portlandzement hinzu gegeben; es findet jedoch keine selbständige Reaktion statt.

Bisher bekannte hydraulische Bindemittel auf Silikatbasis enthalten kein molekulares Wasser, ihre hydraulischen Komponenten enthalten in ihrer Summenformel keinen an Sauerstoff gebundenen Wasserstoff und die hydraulischen Komponenten bestehen überwiegend aus kristallinen (Erd-)Alkalisilikaten. Die Silikatanionen der hydraulisch aktiven Phasen liegen nach H.F.W. Taylor, The chemistry of cements, Academic Press, London 1964, S. 2f.in Form einzelner isolierter oder *monomerer* Silikat-Tetreaeder vor (Q⁰). Ausnahme ist die seltene Phase Belinit, die ein Ringsilikat ist und Chlor enthält. In Belinit ist jedes Silikattetraeder über gemeinsame Sauerstoffe mit zwei weiteren Silikat-tetraedern verbunden (Q²). Alle bisher bekannten hydraulischen Bindemittel auf Silikatbasis besitzen ein molares Verhältnis CaO:SiO₂ von mindestens zwei.

Derartige hydraulische Bindemittel werden rein oder vermischt mit anderen Stoffen als *Zement* vielfältig zur Herstellung von festen Baustoffen wie Beton, Mörtel oder in Spezialbindern, eingesetzt. Technische Bedeutung besitzen darüber hinaus zwei weitere Typen von meist höher kondensierten silikatischen und amorphen (aber nicht hydraulischen) Bindemitteln, nämlich einerseits Wassergläser und andererseits latent hydraulische bzw. pozzulanische Materialien wie Hochofenschlacken, Flugaschen usw.
*1. Zement* wird durch gemeinsames Brennen von Calciumkarbonat und einem Silikatträger bei ca. 1450 °C zu einem Produkt hergestellt, das als *(Zement-)Klinker* bezeichnet wird und im Wesentlichen aus den hydraulisch reaktiven Klinkerphasen Tricalciumsilikat (Alit, Ca₃SiO₅), Dicalciumsilikat (Belit, vor allem ß-Ca₂SiO₄) und untergeordnet Tricalciumaluminat Ca₃Al₂O₆ und Calciumaluminatferrit Ca₄(Al,Fe)₄O₁₀ besteht. Durch Mahlen und Zusetzen weiterer Stoffe, vor allem von Gips oder Anhydrit als Reaktionsverzögerer, wird so genannter *Portlandzement* (CEM I) erhalten. CEM I wird oft mit latent hydraulischen Silikaten zu den Zementtypen CEM II bis CEM V vermahlen. Durch das Mahlen wird eine höhere Oberfläche erzeugt, was die Geschwindigkeit der hydraulischen Reaktion beschleunigt. Nach DIN 1164 besteht Portlandzement aus 61% bis 69% Calciumoxid CaO, 18% bis 24% Siliziumdioxid SiO₂, 4% bis 8% Aluminiumoxid Al₂O₃ und 1% bis 4% Eisenoxid Fe₂O₃.
2. Weiterhin werden so genannte Wassergläser hergestellt. Hierbei handelt es sich um feste, aber wasserlösliche Gläser aus Alkalioxiden und SiO₂, die bei ca. 1400 °C erschmolzen werden. Wassergläser werden als konzentrierte, stark alkalische Lösungen oder Pulver eingesetzt.
3. Darüber hinaus lassen sich silikatische Ausgangsstoffe durch Reaktion mit einer Lauge zu einem Bindemittel umsetzen, wobei Alkalihydroxide als Laugen dienen. Das entstehende Produkt wird meist als Geopolymer bezeichnet, besitzt jedoch nur eine geringe wirtschaftliche Bedeutung.

Die Typen 2 und 3, Wassergläser und Geopolymere, sind nur bedingt als hydraulische Bindemittel im Sinne der eingangs aufgeführten Definition zu sehen, da sie entweder schon als Lösung, also nicht fest, vorliegen bzw. wegen ihrer hohen Wasserlöslichkeit unter Wasser nicht erhärten (Alkalisilikate) oder als Feststoffe nicht reaktiv sind und zum Anstoß der hydraulischen Reaktion Zusätze wie CEM I oder Lauge benötigen. Sie erfordern zu ihrer Herstellung sowohl besondere Ausgangsmaterialien als auch jeweils mehrere aufwändige Verfahrensschritte, wodurch ihre Herstellung teuer ist. Gleichzeitig ist ihre Verträglichkeit mit verschiedenen Zusätzen aufgrund des sehr hohen pH-Wertes äußerst eingeschränkt und die meist sehr langsame Reaktionsgeschwindigkeit kann nicht wirksam beeinflusst, insbesondere nicht beschleunigt werden. Wegen der eingeschränkten Verarbeitbarkeit (langsame Erhärtung, stark alkalische Reaktion) und der geringen Festigkeit ist ihr Anwendungsspektrum daher begrenzt.

Das bekannteste und am häufigsten eingesetzte hydraulische Bindemittel ist Zement, insbesondere Portlandzement. Der für die Herstellung des Vorprodukts Zementklinker bei Temperaturen bis zu ca. 1450 °C notwendige Brennprozess ist nach H.F.W.Taylor, Cement chemistry, Academic Press, London 1990, S. 64f mit einer theoretischen Reaktionsenthalpie von + 1761 kJ pro kg Zementklinker besonders energieintensiv. Der Löwenanteil des Energiebedarfs entfällt auf die Entsäuerung (oder Dekarbonatisierung) von Calciumkarbonat, das aus Kalkstein, Kalkmergeln oder anderen kalkhaltigen Materialien stammt. Die unter Freisetzung von CO₂ verlaufende Reaktion trägt mit einer Reaktionsenthalpie von + 2138 kJ pro kg Zementklinker stark endotherm zur Gesamtreaktion bei.

Zur Herstellung von 1 kg Portlandzement sind etwa 1,2 kg Kalk erforderlich. Zusätzlich ist zur Bildung der hydraulisch aktiven Klinkerphasen Alit, Belit, Tricalciumaluminat und Calciumaluminatferrit die teilweise Aufschmelzung der Ausgangsmaterialien nötig. Für das Endprodukt Portlandzement ergibt sich als Summe des theoretischen Energiebedarfs, der Wärmeverluste, der Mahlenergie etc. ein tatsächlicher Gesamtenergieaufwand von ca. + 4300 kJ pro kg.

Bei der Herstellung von Portlandzement werden aus den calciumcarbonathaltigen Ausgangsmaterialien erhebliche Mengen an CO₂, freigesetzt, die in Summe etwa 850 g CO₂ pro kg Klinker betragen.

Die Reaktion von Portlandzement mit Wasser führt zur Verfestigung (Aushärtung). Hierbei entstehen nach H.F.W.Taylor, Cement chemistry, Academic Press, London 1990, S. 218, C-S-H-Gele, d.h. schlecht kristalline Calcium-Silikat-Hydrate), Calcium-Aluminat-Hydrate und Portlandit Ca(OH)₂. Letzterer ist eine notwendige Folge der Abbindereaktion und tritt mit einem Anteil von ca. 20 Gew.% im abgebundenen, d.h. ausgehärteten Zementstein auf.

Der Gesamt-Calcium-Gehalt in Portlandzement allgemein und besonders im Vorprodukt Klinker kann nicht wesentlich erniedrigt werden, da sonst die hydraulische Reaktivität stark zurückgeht. Der Gesamt-Calcium-Gehalt liegt, als molares Ca:Si-Verhältnis ausgedrückt, das im Übrigen mit dem molaren (CaO):(SiO₂)-Verhältnis identisch ist, stets bei 3,0 +/- 0,2. Die in Zementstein aus Portlandzement vorliegende Bindemittelmatrix aus C-S-H-Gel, die im Wesentlichen aus der Reaktion von Tricalciumsilikat (Ca₃SiO₅) stammt, besitzt ein molares Ca:Si-Verhältnis von 1,7 bis 1,8. Das überschüssige CaO liegt nach der Hydratation als Portlandit Ca(OH)₂ vor.

Portlandit trägt nur unwesentlich zur mechanischen Stabilität des Baustoffs bei. Vielmehr bestimmt Portlandit in der Nutzungsphase des Zements den pH-Wert des Baustoffes, der dann bei etwa pH 12,5 liegt. Säureangriffe werden zunächst durch Portlandit gepuffert; ist dieser jedoch aufgebraucht, indem er z.B. durch CO₂ in CaCO₃ umgewandelt ist, sinkt der pH-Wert und die Bindemittelmatrix aus C-S-H-Gel wird angegriffen und zersetzt.

Eine Hemmung der Reaktion kann durch ein möglichst dichtes Gefüge und damit eine geringe Stofftransportgeschwindigkeit erreicht werden. Die Lösung von Portlandit selbst generiert jedoch neue Angriffsmöglichkeiten. Die Pufferung des pH-Wertes in Zement durch Portlandit stellt somit einen eingeschränkten Korrosionsschutz für Baustahl dar. Die durch Portlandit generierte hohe Alkalität verhindert dagegen den Einsatz von Basen- oder Alkali-empfindlichen Zusätzen in zementgebundenen Baustoffen, wie z.B. organischen Fasern. Für den Korrosionsschutz wäre ein pH-Wert von über 9,5 ausreichend.

Portlandzement zeigt beim Abbinden eine hohe Reaktionsenthalpie, die im Wesentlichen aus der Bildung von Portlandit stammt, und zu Wärmestaus in großen, massigen oder voluminösen Bauteilen führt. Die Wärmeentwicklung pro Zeiteinheit kann durch Verlangsamung des Reaktionsumsatzes mittels Kornvergrößerung, Zusatzmittel oder Verdünnung mit Flugaschen vermindert werden. Dies bremst allerdings auch die Festigkeitsentwicklung.

Die Festigkeit von Zementstein wird durch die Hauptkomponente C-S-H-Gel bestimmt, die nur etwa 50 Gew.% ausmacht. Daher beträgt der effektive Energieaufwand zur Herstellung der festigkeitsbestimmenden Bestandteile von Zementstein aus Portlandzement ca. 8600 kJ pro kg. Die andere Hälfte des Zementsteins, im wesentlichen Calciumaluminathydrate und Portlandit, trägt zur Festigkeit des Werk- oder Baustoffs kaum bei und ist, bezogen auf die Festigkeit, ein unerwünschtes Nebenprodukt. Die Portlanditmenge kann in technischen Systemen nachträglich durch die Beimischung von Mikrosilica oder latent hydraulischen Stoffen reduziert werden. Überschüssiger Portlandit reagiert dann langsam unter Verbrauch von Microsilica zu zusätzlichen Calcium-Silikat-Hydraten weiter. Dieser Prozess ist allerdings aufwändig und teuer.

C-S-H-Gele können darüber hinaus Calcium in variablen Mengen einbauen. Mit zunehmendem Calciumgehalt sinkt der Vernetzungsgrad der zugehörigen Silikat-Baueinheiten und damit ihr Beitrag zur Festigkeit des Baustoffes sowie ihre chemische Beständigkeit. In abgebundenem Portlandzementstein liegen die C-S-H-Gele mit einem Calciumgehalt im molaren Ca:Si-Verhältnis von 1,7 bis 1,8 vor. Calcium-Silikat-Hydrate existieren dagegen in einem molaren Ca:Si-Bereich von 0,5 bis 3,0. Dies wird durch natürlich vorkommende oder synthetisch hergestellte Feststoffe belegt.

Aus den genannten Gründen wäre es daher sinnvoll, in einem ausgehärteten, hydraulischen Bindemittel im Allgemeinen und in Zementstein aus Portlandzement im Besonderen C-S-H-Gele mit niedrigem Calciumgehalt anzustreben. Allerdings führt bereits eine geringe Reduktion des Calciumgehalts bei der Produktion von Portlandzementklinker im Drehrohrofen zu reaktionsträgen Calciumsilikaten, insbesondere zu einer Erhöhung des Gehalts an Belit. Eine weitere Senkung des Calciumgehalts führt zu hydraulisch inaktiven Produkten wie Wollastonit ß-CaSiO₃, Pseudowollastonit α-CaSiO₃ oder Rankinit Ca₃Si₂O₇. Auf diese Weise, also auf einer "Klinkerroute", sind calciumarme hydraulische Bindemittel nicht zu erhalten.

Im System CaO-SiO₂-H₂O gibt es reine Calcium-Silikat-Hydrate mit molaren Ca:Si-Verhältnissen kleiner als 2,0 und insbesondere kleiner oder gleich 1,0. Es sind sowohl natürlich vorkommende Mineralien, z.B. 11 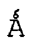 Tobermorit, 14 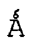 Tobermorit, Xonotlit, α-C₂SH, oder Suolunit [nach Young-Hwei Huang, Suolunite, a new mineral, American Mineralogist 53 (1968), S. 349], als auch Syntheseprodukte bekannt. Diese Verbindungen besitzen aufgrund ihres molaren Ca:Si-Verhältnisses einen Silikat-Vernetzungsgrad zwischen Q⁰ und Q³ und enthalten in einzelnen Fällen Silanol-Gruppen, jedoch ist von keiner dieser Phasen eine hydraulische Reaktivität oder ein latent hydraulisches Verhalten bekannt.

In G. Sun, A. R. Brough, J. F. Young, 29Si NMR Study of the Hydration of Ca3SiO5 and β-Ca2SiO4 in the Presence of Silica Fume, J. Am. Ceram. Soc., 82 (11), 3225-3230 (1999*)* wird die Hydratation von Mischungen aus Ca₃SiO₅ und β-Ca₂SiO₄ mit verschiedenen Anteilen an Quarzstaub ("Silica Fume") untersucht. Die Ausgangsstoffe werden vermischt. In den Mischungen resultieren durch die verschiedenen Anteile an Quarz unterschiedliche Verhältnisse der Vernetzungsgrade Q₀ (C₂S und C₃S) und Q₄ (Quarz). Die Ausgangsmischungen sind wasserfrei. Die Mischungen werden unter Methanol vermahlen und anschließend bei 60°C getrocknet. Die getrocknete Masse wird anschließend pulverisiert. Die resultierenden Mischungen werden mit deionisiertem Wasser versetzt und die Hydratation bei 21°C beobachtet. Dazu werden Proben mit verschiedenen Hydratisierungsgraden entnommen, gemahlen und mittels ²⁹NMR-Spektroskopie untersucht. Dabei wird insbesondere das Auftauchen einer Spezies mit einem Vernetzungsgrad von Q³ beobachtet, welche einer Dreierkette von Silikat-Einheiten im entstandenen Calcium-Silikat-Hydrat (C-S-H) zugeordnet wird.

In K. Garbev, P. Stemmermann, L. Black, C. Breen, J. Yarwood, B. Gasharaova, Structural Features of C-S-H(I) and Its Carbonation in Air - A Raman Spectroscopic Study. Part I: Fresh Phaes, J. Am. Ceram. Soc., 90 (3), 900 - 907 (2007) werden mechanochemisch präparierte Calcium-Silikat-Hydrate vom Typ C-S-H(I) mittels Raman-Spektroskopie untersucht. Es werden dazu nanokristalline C-S-H(I)-Phasen unter Stickstoff mechanochemisch aus stöchiometrischen Mischungen von CaO und SiO₂ (Aerosil) hergestellt. Die Oxide werden unter Zugabe von destilliertem Wasser in einer Kugelmühle für 36 h vermahlen. Anschließend werden die Aufschlämmungen bei 60°C für 120 h getrocknet. Proben mit verschiedenen C/S-Verhältnissen werden untersucht. Die C-S-H(I) Phasen sind nicht hydraulisch aktiv.

Darüber hinaus gibt es Verbindungen, in denen Teile der Calciumionen substituiert werden: M^{(+II)}HₓM^{(+I)}₍₂₋ₓ₎[SiO₄], wobei M^{(+II)} = Erdalkalien und M^{(+I)} = Alkalien darstellen. Auch hier treten ähnliche molare Ca:Si-Verhältnisse und damit ähnliche Vernetzungsgrade wie bei den oben genannten reinen Calcium-Silikat-Hydraten und wiederum in einzelnen Fällen Silanol-Gruppen auf. Auch von keiner dieser Phasen ist eine hydraulische Reaktivität oder ein latent hydraulisches Verhalten bekannt.

Hasegawa et al. beschreiben in Mechano-radicals produced from ground quartz and quartz glass, Powder Tech. 85 (1995) S. 269, Veränderungen, die beim Mahlen von Quarz auftreten, indem sie Fehlstellen an der Quarzoberfläche durch spektroskopische Verfahren nachweisen. Dabei entstehen keine hydraulischen Phasen.

Carmody et al. weisen in Modification of kaolinite surfaces through mechano-chemical activation with quartz: a diffuse reflectance infrared fourier transform and chemometrics study, Appl. Spectroscopy 60 (2006) S. 1414, die Veränderungen von Kaolinit-Oberflächen durch gemeinsames Mahlen mit Quarz nach. Auch hier entsteht keine neue Phase, die hydraulisch reaktiv ist.

Justnes et al. beschreiben in Mechanism for performance of energetically modified cement versus corresponding blended cement, Cem. Concr. Res. 35 (2005) S. 315, das gemeinsame Mahlen von Zement mit Quarz und die dabei auftretende Verringerung der Korngröße beider Mischungspartner. Wiederum entsteht keine neue Phase. Quarz wird ausdrücklich als nicht reaktiver Füllstoff bezeichnet.

Aus M. Senna, Incipient chemical interactions between fine particles under mechanical stress - a feasibility of producing advanced materials via mechanochemical routes, Solid state Ionics 63-65 (1993) S. 3-9, ist bekannt, dass sich Oxide und Hydroxide in Form sehr feiner Partikel, z.B. als Ca(OH)₂ und SiO₂, durch eine mahlende Homogenisierung, die auch als *sanfte Mechanochemie* (*soft mechanochemistry*) bezeichnet wird, unter dem Einfluß von Hydroxyl-Gruppen oder von Wasser an ihrer Oberfläche verändern. Dabei ließen sich eine Zerstörung der Kristallstruktur (*Amorphisierung*) und eine Dehydration der Hydroxide beobachten. Diese Befunde wurden aufgrund deutlicher Veränderungen in der thermischen Behandlung zum Brennen von Keramiken, die nicht hydraulisch aktiv sind, erlangt.

Die WO 2007/017142 A2 offenbart ein Verfahren zur Herstellung von Belit-Bindemittel. Belit enthält keinen an Sauerstoff gebundenen Wasserstoff und besitzt einen Vernetzungsgrad von Q⁰.

Aus der DE 22 22 545 B2 ist ein Verfahren zur Herstellung eines wasserhaltigen Calciumsilikats des Xonotlit-Typs bekannt, wobei der Xonotlit kristallin ist. Das in diesem Patent beschriebene amorphe Vorprodukt ist, bedingt durch die hydrothermale Herstellung, ein nicht hydraulisch erhärtendes Hydrat.

Die EP 0 500 840 B1 offenbart Tektoalumosilikat-Zement sowie ein zugehöriges Herstellungsverfahren, wobei das Tektoalumosilikat einen Vernetzungsgrad von Q⁴ aufweist. Die hydraulische Erhärtung von entsprechenden Verbindungen basiert zudem nicht auf der Bildung von C-S-H-Phasen.

Gemäß der DE 195 48 645 A1, die ein Verfahren zur Herstellung von Sekundärrohstoffen aus Abbruchmaterial beschreibt, wird Betonabbruch durch Mahlen aktiviert. Es wird jedoch derart gemahlen, dass kein hydraulisch reaktives Produkt entsteht, sondern ein Produkt, das als Zementrohmehlkomponente verwendet werden kann. Durch die Verwendung von Betonabbruch ist in der Ausgangskomponente zudem ein Sulfatträger enthalten, der als Reaktionsprodukt die Herstellung eines einphasigen Produktes verhindern dürfte.

Ausgehend hiervon ist es die Aufgabe der vorliegenden Erfindung, ein einphasiges hydraulisches Bindemittel, ein Gemisch, das ein derartiges Bindemittel enthält, Verfahren zur Herstellung des Baustoffs und des Gemischs sowie einen Baustoff, der mit dem Bindemittel oder dem Gemisch hergestellt wurde, vorzuschlagen, die die vorher genannten Nachteile und Einschränkungen nicht aufweisen.

Insbesondere soll ein einphasiges hydraulisches Bindemittel auf Silikatbasis und ein dieses Bindemittel enthaltendes Gemisch bereitgestellt werden, das im Vergleich zu herkömmlichem Portlandzement bzw. zu hydraulischen oder latent hydraulischen Bindemitteln
- den Energieverbrauch bei der Bindemittelherstellung verringert, d.h. das bei niedrigen Temperaturen hergestellt wird,
- die Höhe der CO₂-Emissionen senkt,
- eine geringere gesamte oder gleichmäßigere Wärmefreisetzung bei der Hydratation zeigt und
- eine höhere Beständigkeit und Festigkeit der mit diesem Bindemittel hergestellten Bau- bzw. Werkstoffe erzielt.

Diese Aufgabe wird im Hinblick auf das einphasige hydraulische Bindemittel durch die Merkmale des Anspruchs 1, im Hinblick auf das Gemisch durch das Merkmal des Anspruchs 4, im Hinblick auf die Herstellungsverfahren durch die Merkmale eines der Ansprüche 6 bis 8 und im Hinblick den Baustoff durch die Merkmale des Anspruchs 12 gelöst. Die Unteransprüche beschreiben jeweils vorteilhafte Ausgestaltungen der Erfindung.

Das erfindungsgemäße hydraulische Bindemittel ist eine hydraulisch aktive silikatische Verbindung, die Calcium, Silizium, Sauerstoff und Wasserstoff enthält. Weitere Elemente können ebenfalls Bestandteil des Bindemittels sein und werden nach der Art ihres Einbaus unterschieden: Alkalien, insbesondere Natrium; Erdalkalien, insbesondere Magnesium, oder andere zweiwertige Kationen, insbesondere Fe[+II] und Mangan; dreiwertige Kationen, insbesondere Al[+III], werden, als M[6]^{x+} sechsfach oder höher mit Sauerstoff koordiniert, eingebaut, wobei die M[6]^{x+} das Calcium teilweise ersetzen. Tetraedrisch durch Sauerstoff koordinierte Elemente, insbesondere Phosphor, Aluminium oder Fe³⁺ bilden Sauerstoffanionen und werden als Phosphat, Aluminat oder Ferrat auf tetraedrischen Positionen als M[4]^{y+} eingebaut, wobei sie Silizium teilweise ersetzen. Das amphotere Aluminium eignet sich ebenso wie Magnesium für beide Varianten. Die Hochzahlen x+ und y+ geben jeweils die Ladung des betreffenden Kations an.

Die Stöchiometrie des erfindungsgemäßen hydraulischen Bindemittels wird durch den Bereich des molaren Verhältnisses Ca:Si von 0,2 bis 2,0; besonders bevorzugt von 0,3 und bis unter 1,0, definiert. Die Bestandteile Sauerstoff, Wasserstoff bzw. Calcium und weitere Elemente sorgen für den Ladungsausgleich. Im Falle, dass ein Teil der Calcium- oder Siliziumatome durch die Substituenten M[6]^{x+}O_{x/2} bzw. M[4]^{y+}O_{y/2} ersetzt sind, wird anstelle des einfachen molaren Ca:Si-Verhältnisses, das identisch ist mit dem molaren (CaO) : (SiO₂) - Verhältnis, das modifizierte molare Verhältnis
[CaO + (x/2) · (M[6]^{x+}Oₓ/2)] : [SiO₂ + M[4]^{y+}O_{y/2}] angegeben.

Das Bindemittel erweist sich nach Röntgenbeugungs-Untersuchungen (Röntgen-Pulverdiffraktometrie) als röntgenamorph.

Silikationen bestehen aus Sauerstofftetraedern, deren Zentrum durch ein tetraedrisch koordiniertes Silizium besetzt ist. Die derart aufgebauten Silikattetraeder sind über gemeinsame Sauerstoff-Atome miteinander verknüpft. Silizium-Atome können in höheren Anteilen durch Aluminium-Atome, zu geringeren Anteilen durch Bor-, Germanium-, Titan-, Eisen-, Beryllium- oder Phosphor-Atome ersetzt sein. Die Struktur der Silikationen im erfindungsgemäßen hydraulischen Bindemittel ist durch eine variable Verknüpfung der Tetraeder gekennzeichnet.

Untersuchungen mit ²⁹Si-Festkörper-NMR-Spektroskopie zeigten eine breite Verteilung des Silikat-Vernetzungsgrades: Es traten NMR-Signale mit den typischen chemischen Verschiebungen für Q⁰ (monomere Silikat-Tetraeder), über Q¹, Q², Q³ bis Q⁴ auf. Die Hochzahl gibt hierbei die Anzahl der mit dem betrachteten Tetraeder über gemeinsame Sauerstoffe verknüpften Tetraedernachbarn an: Q¹ beschreibt ein Silikat-Dimer oder die endständigen Silikat-Tetraeder in einer Kettenanordnung mit Q²-Kettengliedern; Q³ und Q⁴ entsprechen Silikat-Tetraedern mit drei bzw. vier Silikat-Tetraedern als Nachbarn. Die aufgefundene Verteilungsbreite des einphasigen hydraulischen Bindemittels weist einen mittleren Vernetzungsgrad größer als Q^{1,5} auf und belegt nicht nur das Vorkommen unterschiedlicher Vernetzungsgrade Qⁿ, sondern auch eine hohe Unordnung der einzelnen Vernetzungstypen.

Die teilweise Substitution von Siliziumatomen durch Atome anderer Netzwerkbildner, insbesondere von Aluminium, Bor, Germanium, Phosphor, Eisen, Beryllium oder Titan, ist möglich. Besonders relevant ist die Aluminium-Substitution, die maximal bis zu einem molaren Verhältnis von Al:Si zu 1:2 reichen kann.

Die Calciumatome liegen in Form von Ca²⁺-Ionen als Bindungspartner der negativ geladenen Silikat-Einheiten vor. Ein teilweiser Ersatz durch Na-, K-, Li-, Mg-, Sr-, Ba-, Mn-, Fe[+II]- oder Al[+III]-Atome ist möglich.

Die Wasserstoff-Atome liegen in Form von Silanol-Gruppen und ggf. als molekulares Wasser oder als Hydroxid vor; dieses Vorkommen lässt sich mittels Infrarot- oder Raman-Spektroskopie nachweisen, wobei Schwingungsmoden für Si-OH (Silanol-Gruppe) gefunden worden sind. Daneben lassen sich Schwingungsmoden für Ca-OH und H-O-H nachweisen.

Der summarische H₂O-Gehalt (Wassergehalt) des erfindungsgemäßen einphasigen hydraulischen Bindemittels steht im Gegensatz zu bekannten hydraulischen Bindemitteln wie z.B. Zementklinker. Er umfasst den in Sauerstoff-Wasserstoff-Bindungen gebundene Anteil des Bindemittels, worin der H₂O-Gehalt zwischen 3,5 Gew.% und 20 Gew.% liegt.

Die vorliegende Erfindung betrifft also ein einphasiges hydraulisches Bindemittel, das aus hydraulisch aktivem Calciumsilikat besteht. Im Vergleich zu Portlandzement enthält dieses Bindemittel weniger Calcium bzw. weniger Calcium substituierende Elemente, so dass das molare Verhältnis [CaO + (x/2) · (M[6]^{x+}O_{x/2})]: [SiO₂ + M[4]^{y+}O_{y/2}] geringer ist. Das erfindungsgemäße einphasige hydraulische Bindemittel lässt sich qualitativ aus denselben Ausgangsmaterialien wie Portlandzement herstellen, die jedoch in hiervon verschiedenen Mengen eingesetzt werden. Außerdem erfordert der Herstellungsprozess niedrigere Temperaturen, so dass sich Energieaufwand und Kohlendioxidemissionen verringern.

Die vorliegende Erfindung betrifft weiterhin ein Gemisch, das einen Anteil des erfindungsgemäßen einphasigen hydraulischen Bindemittels umfasst. Der Anteil beträgt vorzugsweise mindestens 10 Gew.%, besonders bevorzugt mindestens 25 Gew.%, insbesondere mindestens 50 Gew.%.

Das Abbinden oder auch das Aushärten findet, wie von Portlandzement bekannt, durch Mischen mit Wasser und gegebenenfalls unter Wasser statt. Durch die Hydratation entsteht ein mechanisch fester Baustoff. Bei der hydraulischen Reaktion des erfindungsgemäßen hydraulischen Bindemittels entsteht **kein** Portlandit Ca(OH)₂, er ist zu keiner Zeit röntgenographisch nachweisbar. Weiterhin verläuft die Abbindereaktion unter geringerer Wärmefreisetzung als bei der Hydratation von Portlandzement. Die Abbindegeschwindigkeit lässt sich, wie bereits für Portlandzement bekannt, durch die Substitution verschiedener Elemente, die Variation der Verarbeitung (z.B. Mahlen) sowie durch oberflächenaktive Zusätze, wie z.B. organische Zusätze, in einem weiten Bereich einstellen. Das Maximum der Hydratationswärme wird dann nach einem Zeitraum von einigen Minuten oder erst nach mehreren Tagen erreicht.

Beim Abbinden reagiert das erfindungsgemäße hydraulische Bindemittel zu einem Calcium-Silikat-Hydrat (C-S-H-Phase) mit einem molaren Ca:Si-Verhältnis von mindestens 0,2 und weniger als 1,5. Auf molekularer Ebene ändert sich hierbei die Vernetzung der Silikat-Baueinheiten, auf makroskopischer Ebene findet eine Verfestigung statt.

Je nach Zusammensetzung des Ausgangsmaterials enthält das Hydratationsprodukt gegebenenfalls noch weitere Alkalien, Erdalkalien oder andere Elemente, so dass ein Calcium-Silikat-Hydrat mit einem molaren Ca:Si-Verhältnis kleiner oder gleich 1,0 entsteht. Abgebundener Portlandzement besteht dagegen aus einem C-S-H-Gel (*Zementgel*) mit einem molaren Ca:Si-Verhältnis von 1,7 bis 1,8 und enthält zusätzlich Portlandit Ca(OH)₂.

Der erfindungsgemäß aus der Abbindereaktion entstandene Baustoff ist aufgrund der Abwesenheit von Portlandit, aufgrund des im Vergleich zu Zementstein aus Portlandzement geringeren molaren Ca:Si-Verhältnisses und aufgrund der höheren Verknüpfung der Silikat-Baueinheiten chemisch beständiger als Portlandzementstein. Die gemessene Druckfestigkeit nach 28 Tagen überschreitet 20 N/mm². Dieser Wert liegt in der Größenordnung der europäischen Norm EN 197 für Zemente, die 3 verschiedene Klassen für die Festigkeit von 32,5, 42,5 und 52,5 N/mm² angibt.

Falls das erfindungsgemäße Bindemittel weniger als 1% Na₂O enthält, kann es gemeinsam mit alkaliempfindlichen Zusätzen wie z.B. anorganischen oder organische Fasern mit geringer Alkalibeständigkeit zu einem erfindungsgemäßen Baustoff umgesetzt werden.

Die Herstellung des erfindungsgemäßen einphasigen hydraulischen Bindemittels oder eines Gemischs, das das erfindungsgemäße einphasige hydraulische Bindemittel enthält, erfolgt durch ein Ko-Vermahlen (Reaktionsmahlen) eines Vorproduktes, das Calcium, Silizium, Sauerstoff und Wasserstoff mit monomeren oder dimeren Silikat-Baueinheiten enthält (d.h. ein Calcium-Silikat-Hydrat), mit einem festen silikatischen Rohstoff mit hohem Vernetzungsgrad, wie z.B. Quarz oder Quarzsand.

Der erste Ausgangsstoff ist dabei durch die chemischen Elemente Calcium, Silizium, Sauerstoff und Wasserstoff charakterisiert, die in Form von strukturellem Wasser, Kristallwasser oder OH-Gruppen sowie von monomeren oder dimeren Silikat-Einheiten vorliegen.

Der zweite Ausgangsstoff ist ein silikatischer Feststoff, der durch einen hohen Vernetzungsgrad der Silikat-Tetraeder von Q³ bis Q⁴ charakterisiert ist.

In einer besonderen Ausgestaltung liegen beide Ausgangsstoffe in einem gemeinsamen Material vor. Hierfür eignen sich bevorzugt alte, d.h. nicht mehr als Baustoff genutzte Zementsteine oder Mörtel, die Calcium-Silikat-Hydrate, ggf. Zuschläge und bereits Sand enthalten, die direkt vermahlen werden.

In einer besonderen Variante dieser Ausgestaltung wird darüber hinaus zusätzlich einer der Ausgangsstoffe zugegeben, um eine bestimmte Zusammensetzung, insbesondere im Hinblick auf ein gewünschtes molares Ca:Si-Verhältnis im erfindungsgemäßen Bereich zu erhalten. Darüber hinaus können geringe Mengen an Wasser für diese Abstimmung zugegeben werden.

In einer weiteren Ausgestaltung werden Ausgangsmaterialien, die beim Mahlen zunächst zum ersten Ausgangsstoff reagieren, und der zweite Ausgangsstoff eingesetzt. Dies erfolgt vorzugsweise bei einem Ansatz, der das Vermahlen von Portlandit Ca(OH)₂ und Aerosil (amorphes SiO₂) umfaßt. Dabei reagieren zunächst Portlandit und Aerosil zu einem ersten Ausgangsstoff, nämlich einer C-S-H-Phase, die anschließend mit dem zweiten Ausgangsstoff, weiterem hochpolymeren Aerosil, zu dem erfindungsgemäßen Bindemittel reagiert.

Das erfindungsgemäße einphasige hydraulische Bindemittel entsteht beim Vermahlen der Ausgangsstoffe in einer Mühle, bevorzugt unter erhöhter Scher- und Druckwirkung, z.B. in einer Scheibenschwingmühle, einer Kugelmühle oder einer Wälzmühle. Die beiden Reaktanden bilden dabei einen neuen Stoff mit einem mittleren Vernetzungsgrad von mehr als Q^{1,5}. Der zweite Ausgangsstoff wird beim Ko-Vermahlen depolymerisiert. Das so gebildete einphasige Bindemittel enthält Silikat-Baueinheiten mit Silanol-Gruppen, die beim Anmachen des Bindemittels mit Wasser hydraulisch reagieren und zu einem Abbinden, zu einer Verfestigung führen.

Die Art und Zusammensetzung der Ausgangsstoffe (Reaktanden) bestimmt zusammen mit den Parametern des Ko-Vermahlens die genaue Zusammensetzung, Struktur und hydraulische Reaktivität des Bindemittels. Insbesondere der Calciumgehalt führt, z.B. bei Verwendung eines synthetischen Calcium-Silikat-Hydrats als erstem Ausgangsstoff mit einem molaren Ca:Si-Verhältnis von 1,0 bis 1,2 zu verschieden schnell hydraulisch reagierenden Produkten.

Der erste Ausgangsstoff wird in der Regel über eines der im Folgenden erläuterten Verfahren hergestellt:
- In einem *thermischen Verfahren* werden zunächst Alkali-/Erdalkali-Silikate bei Temperaturen bis 700 °C hergestellt, indem Alkaliverbindungen, Erdalkaliverbindungen und Silikate gemeinsam gesintert werden. Eine anschließende Behandlung mit Wasser führt durch Einbau von Kristallwasser zu dem gewünschten Alkali-/Erdalkali-Silikat-Hydrat. Als Beispiel dient die Herstellung von CaNa₂SiO₄·n H₂O aus CaCO₃, Na₂CO₃, SiO₂ und H₂O:

   CaCO₃ + Na₂CO₃ + SiO₂ → CaNa₂SiO₄ + 2 CO₂.

   CaNa₂SiO₄ + n H₂O → CaNa₂SiO₄·n H₂O
- In einem *hydrothermalen Verfahren* in Druckautoklaven bei 140 °C bis 300 °C werden calciumhaltige Rohstoffe wie CaO, CaCO₃ oder Ca(OH)₂ und siliziumhaltige Rohstoffe wie Quarz, Silica, Glimmer, Feldspäte, Altbetone, Gläser oder Schlacken durch direkte Reaktion mit Wasser oder Wasserdampf im Druckautoklaven umgesetzt. Die Zugabe einer Lauge, bevorzugt NaOH oder KOH, ist möglich. Die Lauge stellt den pH-Wert zwischen 11 und 13 ein, erhöht die Reaktionsgeschwindigkeit und erlaubt den Einsatz von langsam reagierenden Silizium-Verbindungen als Rohstoff.
- In einem *mechanochemischen Verfahren* werden calciumhaltige Rohstoffe wie CaO, CaCO₃ oder Ca(OH)₂ und die siliziumhaltigen Rohstoffe wiederum ggf. unter Zugabe einer Lauge in einer Mühle vermahlen. Bei reaktionsträgen Systemen, wie z.B. bei der Vermahlung von CaO mit Quarzsand, muss anschließend die oben beschriebene hydrothermale Behandlungsstufe angeschlossen werden.
- Daneben ist die Herstellung eines ersten Ausgangsstoffes durch die Hydratation von Zementklinkern oder Sol-Gel-Verfahren möglich.

Als zweiter Ausgangsstoff (Silikatträger) dient Quarz, Quarzsand oder ein anderer Rohstoff, Sekundärrohstoff oder ein synthetisches Produkt. Beispiele hierfür sind silikatische Gläser, Feldspäte oder Schlacken.

Darüber hinaus ist eine gemeinsame Bildung oder bereits ein vermischtes Vorliegen der beiden Ausgangsstoffe möglich:
- In-situ Bildung: Der erste Ausgangsstoff wird erst beim Mahlen gebildet und reagiert dann mit dem überschüssigem oder zusätzlichem, hochpolymeren zweiten Ausgangsstoff.
- Gemischte Ausgangsstoffe: Die beiden Ausgangsstoffe liegen bereits gemeinsam in einer Mischung vor und werden direkt reaktionsvermahlen.

In einer weiteren Ausgestaltung besteht die Möglichkeit der Herstellung von Komposit-Bindemitteln unter Einsatz von Hochofenschlacke, Flugasche, natürlichen Puzzolanen oder herkömmlichem (Portland-)Zement. Letzteres ist dann besonders interessant, wenn der erfindungsgemäße Zement sehr schnell reagiert (Reaktionssteuerung) oder wenn die Mischung der Ausgangsmaterialien mehr Calcium als erforderlich enthält.

Aus einem erfindungsgemäßen hydraulischen Bindemittel gebildete Hydratationsprodukte enthalten Calcium-Silikat-Hydrate mit einem niedrigem molaren Ca:Si-Verhältnis und sind damit chemisch beständiger als C-S-H-Gele in Portlandzementstein, da kein Portlandit gebildet wird und die Silikat-Baueinheiten einen höheren Vernetzungsgrad im Vergleich zu Portlandzementstein aufweisen. Auch liegt an den Kontaktstellen des Bindemittels zum Zuschlag in Mörteln oder Betonen kein verwitterungsempfindlicher Portlandit vor, so dass sich keine Sollbruchstellen im Verbund von Mörteln und Betonen bilden. Falls das erfindungsgemäße Bindemittel weniger als 1% Na₂O enthält, ist das daraus gebildete Bindemittelgerüst weniger anfällig für sekundär auftretende Alkali-Kieselsäure-Reaktionen, so dass alkaliempfindliche Zuschläge einsetzbar sind.

Die Erfindung wird im Folgenden anhand von Ausführungsbeispielen näher erläutert.

### Beispiel 1

Als Ausgangsstoffe dienten eine mechanochemisch hergestellte Calcium-Silikat-Hydrat Phase (C-S-H(I)) mit einem molaren Ca:Si-Verhältnis von 1,2 und Quarz (feinkörnig, gewaschen und geglüht).

Die C-S-H(I)-Phase wurde mechanochemisch nach Saito et al., Mechanochemical synthesis of hydrated silicats by room temperature grinding, Solid State Ionics, 101-103 (1997), S. 37, synthetisiert, wobei Aerosil, CaO und H₂O bei einem Massenverhältnis Wasser:Feststoff von 10 in einer Kugelmühle (Mahldauer 32 Std., alle 20 Min. für 10 Min. Ruhestand) vermahlen und anschließend bei 60 °C für 120 Std. getrocknet wurden.

Die C-S-H(I)-Phase wurde anschließend zusammen mit dem Quarz im Massenverhältnis 1:1 (jeweils 1,1 g) in einer Scheibenschwingmühle für 180 Sek. gemahlen. Der Mahlvorgang bewirkte neben einer Veränderung der Korngrößen vor allem eine Reaktion zwischen den Ausgangsstoffen, durch die ein erfindungsgemäßes hydraulisches Bindemittel entstand.

Die BET-Oberflächen der Ausgangsstoffe betrugen im Mittel für C-S-H(I) 68 m²/g und für Quarz 2 m²/g, während das Mahlprodukt einen Wert von 3 m²/g aufweist.

Im IR-Spektrum wurde die Reaktion der Ausgangsstoffe zum erfindungsgemäßen Bindemittel verfolgt. Durch das Mahlen wurde zunächst die Hauptbande der Si-O Streckschwingung bei 960 cm⁻¹ und die Bande der Si-O-Si Schwingung bei 668 cm⁻¹ von C-S-H(I) deutlich geschwächt und verschwand bei intensiver Behandlung ganz. Die (Si-O)-Streckschwingungen von 1078 cm⁻¹ und 1173 cm⁻¹ von Quarz verschwand ebenfalls, dafür wurden verbreiterte und schwächere Banden bei 1095 cm⁻¹ und 1165 cm⁻¹ gemessen, d.h. Quarz depolymerisiert. Im Bereich der OH-Streckschwingung treten nach dem Mahlen zusätzliche, durch Silanol-Gruppen verursachte Banden auf.

Dieser Befund wurde durch ²⁹Si-Festkörper-NMR-Untersuchungen bestätigt. C-S-H(I) mit einem molaren Ca:Si-Verhältnis von 1,2 enthält deutlich Q¹- und Q²-Silikatspezies in einem Verhältnis von 3 zu 2. Nach dem Mahlen war eine Verbreiterung des Q²-Signals, die Konstanz von Q¹ sowie neu Q³ vorhanden. Q⁴ nahm ab, was die Depolymerisation von SiO₂ belegt.

Auch die Ergebnisse der Röntgenbeugung belegen die Reaktion. Generell steigt der röntgenamorphe Anteil mit steigender Mahldauer an. Der charakteristische Basalreflex von C-S-H(I) mit einem molaren Ca:Si-Verhältnis von 1,2 bei 11.45 Å nimmt bei kurzer Mahldauer zusammen mit anderen Reflexen deutlich an Intensität ab. Schwache, aber noch erkennbare Reflexe treten verschoben auf; z.B. von 3.05 Å und 2.8 Å nach 3.02 Å bzw. 2.84 Å.

Die Hydratation des hydraulischen Bindemittels wurde mittels eines Wärmeleitfähigkeitskalorimeters verfolgt. Dabei trat ein Maximum der Wärmefreisetzung infolge der Benetzungswärme direkt nach der Injektion von Wasser auf. Anschließend klang die Wärmefreisetzung fast vollständig ab, um schließlich nach einem Minimum bei etwa 25 Min. bis zu einem zweiten Maximum nach 4 bis 5 Std. anzusteigen. Danach fällt die Wärmefreisetzung allmählich ab und nähert sich nach 40 bis 100 Std. asymptotisch der Nulllinie.

Nach dem Aushärten dominierte das Q²-NMR-Signal, das die Neubildung von C-S-H Phase belegt, das Spektrum des abgebundenen Baustoffs. Auch röntgenographisch ließ sich die Neubildung von C-S-H Phase durch Reflexe im Röntgen-Pulverdiffraktogramm bei 3.05 Å und 2.8 Å sowie die Entstehung eines breiten Reflexes zwischen 17 Å und 11.5 Å nachweisen. Beide Messungen belegen die Entstehung eines Calcium-Silikat-Hydrates mit einem geringeren molaren Ca:Si-Verhältnis im abgebundenen Baustoff im Vergleich zum Ausgangsstoff C-S-H(I).

Schließlich liegt im IR-Spektrum des reinen abgebundenen Baustoffs die (Si-O)-Streckschwingung der C-S-H-Phase bei 970 cm⁻¹, was einem molaren Ca:Si-Verhältnis von < 1 und damit im Vergleich zu Portlandzement einer höheren Polymerisation entspricht. Außerdem war die Si-O-Si Bande bei 668 cm⁻¹ deutlich zu erkennen.

Bei einem Verhaltnis Wasser zu Bindemittel von 0,3 und Zugabe von drei Teilen Sand zu einem Teil Bindemittel wurde nach 28 Tagen eine Druckfestigkeit von 20 N/mm² überschritten.

### Beispiel 2

Als Ausgangsstoffe zur Vermahlung wurde eine hydrothermal synthetisierte Mischung eingesetzt, die C-S-H(I) Phase mit einem molaren Ca:Si-Verhältnis von 1,0 und Quarz enthielt.

Zunächst wird die hydrothermale Synthese der Mischung beschrieben. Dazu wurden zunächst Ca(OH)₂ und Quarz gemeinsam in einer Scheibenschwingmühle für 180 Sek. zerkleinert und homogenisiert. Zu 30 g dieser Mischung werden 90 ml Milliporewasser und 10 ml 1M-NaOH hinzu gegeben. Dann wurde die Gesamtmenge in einem stahlummantelten Autoklaven aus Teflon hydrothermal bei 190 °C über 8,5 Std. behandelt.

Das Pulverdiffraktogramm zeigte, dass die hydrothermal synthetisierte Mischung neben den Hauptphasen C-S-H(I) und Quarz kleinere Mengen an 11 Å-Tobermorit, α-C₂SH, Portlandit und CaCO₃ enthielt.

C-S-H(I) besaß keinen basalen Reflex und war somit weniger kristallin (d.h. ungeordneter) als die in Beispiel 1 eingesetzte C-S-H-Phase. Der Reflex bei 0,305 nm besaß die höchste Intensität zusätzlich trat ein Reflex bei 0,28 nm mit 40 bis 50% der Intensität des 0,305 nm-Reflexes auf. Im Infrarot-Spektrum war C-S-H(I) durch eine intensive und breite Bande bei 972 cm⁻¹, die der (Si-O)-Streckschwingung entspricht, charakterisiert. Die Si-O-Streckschwingung des in der Mischung ebenfalls enthaltenen Quarzes lag bei 1078 cm⁻¹.

2,2 g dieses Gemisches wurden anschließend in einer Scheibenschwingmühle für 180 Sek. vermahlen und so in ein erfindungsgemäßes Gemisch überführt das das erfindungsgemäße hydraulische Bindemittel enthält.

Nach dem Mahlen ist die Hauptbande des C-S-H ohne sichtbare Frequenzänderung verbreitert. Eine weitere breite Bande von Si-O-Streckschwingungen besitzt ein Maximum bei 1102 cm⁻¹. Dies zeigt die Depolymerisation des Quarzes als Folge des Mahlens. Im Bereich der OH-Streckschwingung treten nach dem Mahlen zusätzliche, durch Silanol-Gruppen verursachte Banden auf.

Dieser Befund wurde durch ²⁹Si-NMR-Spektroskopie bestätigt, wobei die Messungen nach dem Mahlvorgang einen mittleren Silikat-Polymersationsgrad von Q^{1,8} mit einer sehr breiten Verteilung des Signals im Bereich von Q⁰ (chemische Verschiebung bis -70 ppm) bis Q² (chemische Verschiebung bis -90 ppm) ergaben.

Im Röntgen-Pulverdiffraktogramm waren die C-S-H-Reflexe nach dem Mahlen nur noch schwach zu erkennen. Ähnlich wie in Beispiel 1 trat eine geringe Verschiebung der Reflex bei 0,305 nm und 0,28 nm zu 0,302 nm bzw. 0,284 nm auf. Die Intensitäten der Reflexe gleichen sich an. Nebenphasen wie Portlandit, Calcit und α-C₂SH werden während des Mahlens vollständig zerstört. Insgesamt nahm nach dem Mahlen die Kleinwinkelstreuung deutlich ab: Die Probe wurde homogenisiert.

Anschließend wurde das erfindungsgemäße Gemisch, das das erfindungsgemäße hydraulische Bindemittel enthält mit Wasser versetzt. Das Bindemittel wurde durch Zugabe von Wasser (Massenverhältnis Wasser:Bindemittel = 1,0) zur Hydratation gebracht. In den ersten Sekunden nach dem Zudosieren von (Anmach-)Wasser wurde das Freisetzen von Benetzungswärme beobachtet. Nach einer Periode sehr geringer Nettowärmefreisetzung (sog. Ruheperiode) begann der eigentliche Hydratationsprozess bereits nach wenigen Minuten bis zu einigen Stunden. Bei einem Verhältnis Wasser zu Bindemittel von 0,3 und Zugabe von drei Teilen Sand zu einem Teil Bindemittel wurde nach 28 Tagen eine Druckfestigkeit von 20 N/mm² überschritten.

Im Röntgenpulverdiffraktogramm nahm die Menge C-S-H stark zu. Neben Reflexen bei 0,305 nm und 0,28 nm (C-S-H(I)) war zwischen 1,9 nm und 1,2 nm ein breiter Reflex vorhanden, der für das Hydratationsprodukt C-S-H-Phase mit einem molaren Verhältnis Ca:Si geringer als 1 typisch ist.

### Beispiel 3

Als Ausgangsstoffe dienten Ca(OH)₂ und Aerosil. 17,7 g Ca(OH)₂ und 14,3 g Aerosil wurden zunächst in einem Taumelmischer mit Hilfe von Zirkonoxidkugeln intensiv gemischt und kompaktiert (Volumenreduktion). Die spezifische BET-Oberfläche der Mischung betrug 87 m²/g. Anschließend wurden jeweils 4 g dieser Mischung unterschiedlich gemahlen und zum erfindungsgemäßen Bindemittel umgesetzt. Dies geschah in einer Scheibenschwingmühle in Wolframcarbid-Mahlgefäßen für 60 Sekunden (spezifische Oberfläche nach dem Mahlen 17,5 m²/g) bzw. 180 Sek. (4,2 m²/g) und in einer Kugelmühle in Zirkondioxid-Mahlgefäßen für 60 Min. (5,8 m²/g) bzw. 180 Min. (3,0 m²/g).

Die Bildung des erfindungsgemäßen Bindemittels wurde im IR-Spektrometer verfolgt. Die ursprüngliche Frequenz der ν₂ O-Si-O von 471 cm⁻¹ in Aerosil veränderte sich zu 478 cm⁻¹ bei gleichzeitiger Verbreiterung der Linie. Dies belegt eine interne Deformation der Si-Tetraeder, die auf veränderte Umgebungen der Si-Tetraeder, d.h. auf einen erniedrigten Verknüpfungsgrad zurückgeht. Die Bande bei 388 cm⁻¹, die den Librationsschwingungen der OH-Gruppen im Portlandit entspricht, verschwand durch das Mahlen. Gleichzeitig verlor die OH-Schwingung des Portlandit bei 3660 cm⁻¹ an Intensität und verschwand schließlich ebenfalls. Dieser Befund belegt, dass eine Zerstörung des Portlandits stattfand.

Außerdem wurde das neu gebildete Bindemittel durch eine neue breite und sehr intensive Bande bei 1000 cm⁻¹ sichtbar. Die Hauptinfrarotbanden bei 1105 cm⁻¹ bzw. 1205 cm⁻¹, die als (Si-O)-Streckschwingungen von Aerosil bekannt sind, waren nur noch als Schulter zu erkennen, was die Depolymerisation des Aerosils und die Entstehung einer neuen Phase mit (Ca-O-Si)-Bindungen in Folge des Mahlens belegt. Im Bereich der OH-Streckschwingung treten nach dem Mahlen zusätzliche, durch Silanol-Gruppen verursachte Banden auf.

Mittels eines Wärmeflusskalorimeters wurde die Hydratation aller vier Chargen verfolgt, die innerhalb eines Zeitraumes von 30 Stunden verlief. Zunehmende Mahldauer beschleunigte die Hydratationsreaktion. Bei einem Verhältnis Wasser zu Bindemittel von 0,3 und Zugabe von drei Teilen Sand zu einem Teil Bindemittel wurde nach 28 Tagen eine Druckfestigkeit von 20 N/mm² überschritten.

### Beispiel 4

Als Ausgangsstoffe zur Vermahlung wurde eine hydrothermal synthetisierte Mischung aus C-S-H(I), α-C₂SH, 10 Å-Tobermorit und Quarz eingesetzt.

Zur Synthese der hydrothermal synthetisierte Mischung wurden Ca(OH)₂ und Quarz, 1M-NaOH-Lösung und H₂O in einem Stahl-Autoklaven hydrothermal bei 160 °C über 4 Std. behandelt.

Eine quantitative Röntgenanalyse zeigte, dass die hydrothermal synthetisierte Mischung aus 37 Gew.% amorpher C-S-H-Phase, 50 Gew.% α-C₂SH, 12 Gew.% Quarz, sowie einer kleineren Menge an 10 Å-Tobermorit, Portlandit und CaCO₃ bestand. Im IR-Spektrum ist die amorphe C-S-H-Phase durch eine intensive und breite Bande bei 945 cm⁻¹, die der (Si-O)-Streckschwingung entspricht, charakterisiert. Die Si-O-Streckschwingung von α-C₂SH liegt bei 985 cm⁻¹. Eine weitere Bande bei 754 cm⁻¹ ist ebenfalls für α-C₂SH typisch und entspricht den Si-O(H)-Streckschwingungen.

52 g dieses Gemisches wurden mit 52 g Sand vermischt und anschließend in einer Scheibenschwingmühle für 720 s vermahlen und so in das erfindungsgemäße Gemisch, das das hydraulische Bindemittel enthält, überführt. Das Röntgendiffraktogramm zeigt, dass keine kristallinen Bestandteile außer Quarz vorhanden sind. Eine quantitative Phasenanalyse mit Rietveldmethode und internem Standard zeigt, dass das Bindemittel aus 55 Gew.% amorpher Phase und 45 Gew.% Quarz besteht.

Nach dem Mahlen ist die Hauptbande des C-S-H wesentlich verbreitert. Während die Bande der Si-O-Streckschwingungen von α-C₂SH deutlich sichtbar bleibt ist die Bande bei 754 cm⁻¹ (Si-O(H)-Streckschwingungen, α-C₂SH) nicht mehr vorhanden. Alle Banden des α-C₂SH, an denen H-Atome beteiligt sind, sind entweder nicht mehr vorhanden oder wesentlich abgeschwächt. Neu ist eine Absorption zwischen 3200 cm⁻¹ und 3750 cm⁻¹, die neu auftretenden durch Silanol-Gruppen verursachten Banden entspricht. Die stärksten Banden von Quarz (1078 cm⁻¹ und 1177 cm⁻¹) verschoben sich zu 1095 cm⁻¹ bzw. 1165 cm⁻¹, was eine partielle Depolymerisation belegt.

Das Bindemittel wurde durch Zugabe von Wasser (Massenverhältnis Wasser:Bindemittel = 1,0) zur Hydratation gebracht. In den ersten Sekunden nach dem Zudosieren von (Anmach-)Wasser wurde das Freisetzen von Benetzungswärme beobachtet. Nach einer Periode sehr geringer Nettowärmefreisetzung (sog. Ruheperiode) begann der eigentliche Hydratationsprozess bereits nach wenigen Minuten bis zu einigen Stunden, wobei das Maximum der Wärmefreisetzung nach 5 bis 10 Stunden erreicht wurde. Bei einem Verhältnis Wasser zu Bindemittel von 0,3 und Zugabe von drei Teilen Sand zu einem Teil Bindemittel wurde nach 28 Tagen eine Druckfestigkeit von 20 N/mm² überschritten.

Röntgenographisch wurde die Neubildung von C-S-H Phase mit einem molaren Ca:Si-Verhältnis von etwa 1,0 nachgewiesen.

## Patentansprüche

1. Einphasiges hydraulisches Bindemittel, das Silizium-, Calcium-, Sauerstoff- und Wasserstoff-Atome in einer Anordnung enthält, die Silikat-Baueinheiten mit einem mittleren Vernetzungsgrad größer als Q^{1,5} und Silanol-Gruppen umfasst, wobei kein oder ein Teil der Calcium-Atome durch ein sechsfach oder höher mit Sauerstoff koordiniertes Atom M[6]^{x+}, welches ausgewählt ist aus Na-, K-, Li-, Mg-, Sr-, Ba-, Mn-, Fe[+II]- oder Al[+III]-Atomen, und/oder kein oder ein Teil der Silizium-Atome durch ein tetraedrisch mit Sauerstoff koordiniertes Atom M[4]^{y+}, welches ausgewählt ist aus Al-, Ge-, B-, P-, Fe-, Be- oder Ti-Atomen, ersetzt sind, das molare Verhältnis
[CaO + (x/2) · (M[6]^{x+}O_{x/2})] : [SiO₂ + M[4]^{y+}O_{y/2}]
einen Wert von 0,2 bis 2,0 aufweist und das Bindemittel 3,5 Gew.% bis 20 Gew.% H₂O enthält.

2. Einphasiges hydraulisches Bindemittel nach Anspruch 1, wobei das molare Verhältnis
[CaO + (x/2) · (M[6]^{x+}O_{x/2})] : [SiO₂ + M[4]^{y+}O_{y/2}]
einen Wert von 0,3 bis unter 1,0 aufweist.

3. Einphasiges hydraulisches Bindemittel nach Anspruch 1 oder 2, das nach Zugabe von Wasser zu Hydraten reagiert, wobei mehr als 50 Gew.% der Hydrate Calcium-Silikat-Hydrate mit einem molaren Verhältnis
[CaO + (x/2) · (M[6]^{x+}O_{x/2})] : [SiO₂ + M[4]^{y+}O_{y/2}]
kleiner als 1,5 sind.

4. Gemisch, das ein einphasiges hydraulisches Bindemittel nach einem der Ansprüche 1 bis 3 enthält.

5. Gemisch nach Anspruch 4, das mindestens 10 Gew.% des einphasigen hydraulischen Bindemittels enthält.

6. Verfahren zur Herstellung eines einphasigen hydraulischen Bindemittels nach einem der Ansprüche 1 bis 3 durch
- Reaktionsmahlen eines ersten Ausgangsstoffes, der Calcium-, Silizium-, Sauerstoff- und Wasserstoff-Atome enthält, die in Form von strukturellem Wasser, Kristallwasser oder Hydroxid-Gruppen sowie von Silikat-Baueinheiten mit einem Vernetzungsgrad von Q⁰ bis Q² vorliegen, mit einem zweiten Ausgangsstoff in Form eines festen silikatischen Rohstoffs, der einen Vernetzungsgrad der Silikat-Baueinheiten von Q³ bis Q⁴ aufweist, und,
- solange der H₂O-Gehalt über 20 Gew.% liegt, Trocknen des einphasigen hydraulischen Bindemittels auf einen H₂O-Gehalt von 3,5 Gew.% bis 20 Gew.%.

7. Verfahren zur Herstellung eines einphasigen hydraulischen Bindemittels nach einem der Ansprüche 1 bis 3 durch
- Reaktionsmahlen eines Stoffes, der beim Reaktionsmahlen einen ersten Ausgangsstoff bildet, der Calcium-, Silizium-, Sauerstoff- und Wasserstoff-Atome enthält, die in Form von strukturellem Wasser, Kristallwasser oder Hydroxid-Gruppen, sowie von Silikat-Baueinheiten mit einem Vernetzungsgrad von Q⁰ bis Q², vorliegen, mit einem zweiten Ausgangsstoff in Form eines festen silikatischen Rohstoffs, der einen Vernetzungsgrad der Silikat-Baueinheiten von Q³ bis Q⁴ aufweist, und,
- solange der H₂O-Gehalt über 20 Gew.% liegt, Trocknen des einphasigen hydraulischen Bindemittels auf einen H₂O-Gehalt von 3,5 Gew.% bis 20 Gew.%.

8. Verfahren zur Herstellung eines Gemisches nach Anspruch 4 oder 5 durch
- Reaktionsmahlen von Rohstoffen, die
einen ersten Ausgangsstoff, der Calcium-, Silizium-, Sauerstoff- und Wasserstoff-Atome enthält, die in Form von strukturellem Wasser, Kristallwasser oder Hydroxid-Gruppen sowie von Silikat-Baueinheiten mit einem Vernetzungsgrad von Q⁰ bis Q² vorliegen, oder einen Stoff, der beim Reaktionsmahlen den ersten Ausgangsstoff bildet, der Calcium-, Silizium-, Sauerstoff- und Wasserstoff-Atome enthält, die in Form von strukturellem Wasser, Kristallwasser oder Hydroxid-Gruppen, sowie von Silikat-Baueinheiten mit einem Vernetzungsgrad von Q⁰ bis Q², vorliegen,
und einen zweiten Ausgangsstoff in Form eines festen silikatischen Rohstoffs, der einen Vernetzungsgrad der Silikat-Baueinheiten von Q³ bis Q⁴ aufweist,
und weitere Materialien enthalten, und,
- solange der H₂O-Gehalt des einphasigen hydraulischen Bindemittels über 20 Gew.% liegt, Trocknen des Gemischs, bis das darin enthaltene einphasige hydraulische Bindemittel einen H₂O-Gehalt von 3,5 Gew.% bis 20 Gew.% aufweist.

9. Verfahren nach einem der Ansprüche 6 bis 8, wobei Quarz oder Quarzsand als zweiter Ausgangsstoff eingesetzt wird.

10. Verfahren nach Anspruch 6, 8 oder 9, wobei der erste und der zweite Ausgangsstoff gemeinsam in einem Material vorliegen.

11. Verfahren nach einem der Ansprüche 8 bis 10, wobei nicht mehr als Baustoff genutzter Zementstein oder Mörtel, die Zuschläge oder Sand enthalten können, direkt vermahlen werden.

12. Baustoff, hergestellt durch Abbinden des einphasigen hydraulischen Bindemittels nach einem der Ansprüche 1 bis 3 oder des Gemischs nach Anspruch 4 oder 5 mit Wasser und anschließendem Aushärten.

13. Baustoff nach Anspruch 12, der alkaliempfindliche Zusätze enthält.

## Claims

1. A monophase hydraulic binder containing silicon, calcium, oxygen and hydrogen atoms in an arrangement comprising silicate building units having an average connectedness of higher than Q^{1.5} and silanol groups, with none or a part of the calcium atoms being substituted for by an atom M[6]^{x+} sixfold or higher coordinated with oxygen, which is chosen from Na, K, Li, Mg, Sr, Ba, Mn, Fe[+II] or Al[+III] atoms, and/or none or a part of the silicon atoms being substituted for by an atom M[4]^{y+} tetrahedrally coordinated with oxygen, which is chosen from Al, Ge, B, P, Fe, Be or Ti atoms, the molar ratio of
[CaO + (x/2) · (M[6]^{x+}O_{x/2})] : [SiO₂ + M[4]^{y+}O_{y/2}]
having a value of 0.2 to 2.0 and the binder containing 3.5% to 20% by weight of H₂O.

2. The monophase hydraulic binder of claim 1, said molar ratio of
[CaO + (x/2) · (M[6]^{x+}O_{x/2})] : [SiO₂ + M[4]^{y+}O_{y/2}]
having a value of 0.3 to below 1.0.

3. The monophase hydraulic binder of claim 1 or 2 which reacts to hydrates after adding water, wherein more than 50% by weight of the hydrates are calcium silicate hydrates having a molar ratio of
[CaO + (x/2) · (M[6]^{x+}O_{x/2})] : [SiO₂ + M[4]^{y+}O_{y/2}]
of smaller than 1.5.

4. A mixture containing a monophase hydraulic binder of any one of claims 1 to 3.

5. The mixture of claim 4, containing at least 10% by weight of the monophase hydraulic binder.

6. A method for manufacturing a monophase hydraulic binder of any one of claims 1 to 3 by
- reaction grinding a first starting material containing calcium, silicon, oxygen and hydrogen atoms present in the form of structural water, crystal water or hydroxide groups as well as silicate building units having a connectedness of Q⁰ to Q², with a second starting material in the form of a solid silicate raw material having a connectedness of the silicate building units of Q³ to Q⁴, and,
- as long as the water content is above 20% by weight, drying the monophase hydraulic binder to an H₂O content of 3.5% by weight to 20% by weight.

7. The method for manufacturing a monophase hydraulic binder of any one of claims 1 to 3 by
- reaction grinding a material, which forms a first starting material during reaction grinding containing calcium, silicon, oxygen and hydrogen atoms present in the form of structural water, crystal water or hydroxide groups, as well as silicate building units having a connectedness of Q⁰ to Q², with a second starting material in the form of a solid silicate raw material having a connectedness of the silicate building units of Q³ to Q⁴, and,
- as long as the water content is above 20% by weight, drying the monophase hydraulic binder to a water content of 3.5% by weight to 20% by weight.

8. The method for manufacturing a mixture according to claim 4 or 5 by
- reaction grinding raw materials
containing a first starting material containing calcium, silicon, oxygen and hydrogen atoms present in the form of structural water, crystal water or hydroxide groups as well as silicate building units having a connectedness of Q⁰ to Q², or a material which forms the first starting material during reaction grinding, containing calcium, silicon, oxygen and hydrogen atoms present in the form of structural water, crystal water or hydroxide groups as well as silicate building units having a connectedness of Q⁰ to Q²,
and containing a second starting material in the form of a solid silicate raw material having a connectedness of the silicate building units of Q³ to Q⁴, and further materials, and,
- as long as the H₂O content of the monophase hydraulic binder is above 20% by weight, drying the mixture until the monophase hydraulic binder contained therein has an H₂O content of 3.5% by weight to 20% by weight.

9. The method of any one of claims 6 to 8, wherein quartz or quartz sand are used as the second starting material.

10. The method of claim 6, 8 or 9, wherein the first and the second raw materials are present together in one material.

11. The method of any one of claims 8 to 10, wherein cement stone that is no longer used as building material or mortars which may contain aggregates or sand are directly ground.

12. A building material, manufactured by setting the monophase hydraulic binder of any one of claims 1 to 3 or the mixture of claim 4 or 5 with water and subsequent hardening.

13. The building material of claim 12, containing alkali-sensitive additives.

## Revendications

1. Liant hydraulique monophasique, qui contient des atomes de silicium, de calcium, d'oxygène et d'hydrogène dans un agencement, qui comprend des unités constitutives de silicate présentant un degré de réticulation moyen supérieur à Q¹'⁵ et des groupes silanol, aucun atome de calcium n'étant remplacé ou une partie des atomes de calcium étant remplacée par un atome M[6]^{x+}, hexacoordiné ou à coordination supérieure avec de l'oxygène, qui est choisi parmi les atomes de Na, de K, de Li, de Mg, de Sr, de Ba, de Mn, de Fe[+II] ou d'Al[+III], et/ou aucun atome de silicium n'étant remplacé ou une partie des atomes de silicium étant remplacée par un atome M[4]^{y+}, coordiné de manière tétraédrique avec de l'oxygène, qui est choisi parmi les atomes d'Al, de Ge, de B, de P, de Fe, de Be ou de Ti, le rapport molaire
[CaO + (x/2) • (M[6]^{x+}O_{x/2})] : [SiO₂ + M[4]^{y+}O_{y/2}]
présentant une valeur de 0,2 à 2,0 et le liant contenant 3,5% en poids à 20% en poids de H₂O.

2. Liant hydraulique monophasique selon la revendication 1, le rapport molaire
[CaO + (x/2) • (M[6]^{x+}O_{x/2})] : [SiO₂ + M[4]^{y+}O_{y/2}]
présentant une valeur de 0,3 jusqu'à moins de 1,0.

3. Liant hydraulique monophasique selon la revendication 1 ou 2, qui réagit, après addition d'eau, en hydrates, plus de 50% en poids des hydrates étant des hydrates de calcium-silicate présentant un rapport molaire
[CaO + (x/2) • (M[6]^{x+}O_{x/2})] : [SiO₂ + M[4]^{y+}O_{y/2}]
inférieur à 1,5.

4. Mélange, qui contient un liant hydraulique monophasique selon l'une quelconque des revendications 1 à 3.

5. Mélange selon la revendication 4, qui contient au moins 10% en poids du liant hydraulique monophasique.

6. Procédé pour la préparation d'un liant hydraulique monophasique selon l'une quelconque des revendications 1 à 3 par
- broyage réactif d'une première substance de départ, qui contient des atomes de calcium, de silicium, d'oxygène et d'hydrogène, qui se trouvent sous forme d'eau structurale, d'eau de cristallisation ou de groupes hydroxyde ainsi que d'unités constitutives de silicate présentant un degré de réticulation de Q⁰ à Q², avec une deuxième substance de départ sous forme d'une matière première silicatée solide, qui présente un degré de réticulation des unités constitutives de silicate de Q³ à Q⁴, et,
- tant que la teneur en H₂O est supérieure à 20% en poids, séchage du liant hydraulique monophasique à une teneur en H₂O de 3,5% en poids à 20% en poids.

7. Procédé pour la préparation d'un liant hydraulique monophasique selon l'une quelconque des revendications 1 à 3 par
- broyage réactif d'une substance, qui forme lors du broyage réactif une première substance de départ, qui contient des atomes de calcium, de silicium, d'oxygène et d'hydrogène, qui se trouvent sous forme d'eau structurale, d'eau de cristallisation ou de groupes hydroxyde ainsi que d'unités constitutives de silicate présentant un degré de réticulation de Q⁰ à Q², avec une deuxième substance de départ sous forme d'une matière première silicatée solide, qui présente un degré de réticulation des unités constitutives de silicate de Q³ à Q⁴, et,
- tant que la teneur en H₂O est supérieure à 20% en poids, séchage du liant hydraulique monophasique à une teneur en H₂O de 3,5% en poids à 20% en poids.

8. Procédé pour la préparation d'un mélange selon la revendication 4 ou 5, par
- broyage réactif de matières premières qui contiennent
une première substance de départ, qui contient des atomes de calcium, de silicium, d'oxygène et d'hydrogène, qui se trouvent sous forme d'eau structurale, d'eau de cristallisation ou de groupes hydroxyde ainsi que d'unités constitutives de silicate présentant un degré de réticulation de Q⁰ à Q², ou une substance qui forme, lors du broyage réactif, la première substance de départ, qui contient des atomes de calcium, de silicium, d'oxygène et d'hydrogène, qui se trouvent sous forme d'eau structurale, d'eau de cristallisation ou de groupes hydroxyde ainsi que d'unités constitutives de silicate présentant un degré de réticulation de Q⁰ à Q²,
et une deuxième substance de départ sous forme d'une matière première silicatée solide, qui présente un degré de réticulation des unités constitutives de silicate de Q³ à Q⁴,
et d'autres matériaux et,
- tant que la teneur en H₂O du liant hydraulique monophasique est supérieure à 20% en poids, séchage du mélange jusqu'à ce que le liant hydraulique monophasique qui y est contenu présente une teneur en H₂O de 3,5% en poids à 20% en poids.

9. Procédé selon l'une quelconque des revendications 6 à 8, dans lequel on utilise du quartz ou du sable de quartz comme deuxième substance de départ.

10. Procédé selon la revendication 6, 8 ou 9, dans lequel la première et la deuxième substance de départ se trouvent ensemble dans un matériau.

11. Procédé selon l'une quelconque des revendications 8 à 10, dans lequel on peut broyer directement de la pâte de ciment ou du mortier, qui ne sont plus utilisés comme matériau de construction, qui peuvent contenir des adjuvants ou du sable.

12. Matériau de construction, préparé par prise du liant hydraulique monophasique selon l'une quelconque des revendications 1 à 3 ou du mélange selon la revendication 4 ou 5 avec de l'eau et durcissement consécutif.

13. Matériau de construction selon la revendication 12, qui contient des additifs sensibles aux alcalis.
